# FASCICULE DE BREVET EUROPEEN

(11) **EP 2 820 799 B1**
(45) Date de publication et mention de la délivrance du brevet: **18.12.2019**
(21) Numéro de dépôt: 13704617.3
(22) Date de dépôt: 19.02.2013
(51) Int. Cl.: H04L 12/24

(54) **RÉSEAU DE DISPOSITIFS FORMANT UN SYSTÈME DE DIAGNOSTIC**
NETZWERK AUS VORRICHTUNGEN ZUR FORMUNG EINES DIAGNOSESYSTEMS
NETWORK OF DEVICES FORMING A DIAGNOSTIC SYSTEM

(30) Priorité: 28.02.2012 FR 1251806
(43) Date de publication de la demande: 07.01.2015
(73) Titulaire: Sagemcom Energy & Telecom SAS, 92500 Rueil-Malmaison (FR)
(72) Inventeur: ABEDIN, Armand, F-92500 Rueil Malmaison (FR); CORLAY, Bruno, F-92500 Rueil Malmaison (FR); RAOUF, Djelal, F-92500 Rueil Malmaison (FR); CHU, Nhon, F-92500 Rueil Malmaison (FR)
(74) Mandataire: Cabinet Le Guen Maillet
(86) Numéro de dépôt international: PCT/EP2013/053261
(87) Numéro de publication internationale: WO 2013/127660

(56) Documents cités:
- EP-A2- 2 043 298
- WO-A1-2011/123328
- US-A1- 2010 185 679

## Description

La présente invention concerne le domaine des systèmes et des méthodes de diagnostic des appareils constituant un vaste réseau de communication machine à machine. Plus particulièrement, l'invention va concerner l'architecture hiérarchique d'un réseau de diagnostic.

On s'intéresse à un grand nombre d'appareils fonctionnant en réseau. Ces appareils peuvent par exemple être constitués de capteurs dans une ville, ou dans un bâtiment. Les appareils sont caractérisés par de faibles ressources. Ils sont typiquement prévus pour fonctionner sur une batterie. Il est donc avantageux qu'ils soient le plus sobre possible en ressources et plus particulièrement en énergie.

Lorsque l'on administre un tel réseau d'appareils, on doit pouvoir être en mesure de superviser le réseau et de diagnostiquer son statut de fonctionnement. Pour ce faire, divers systèmes de diagnostic sont connus. Ces systèmes sont généralement basés sur un serveur central de diagnostic qui centralise les alertes en provenance des appareils du réseau. On peut citer les systèmes SNMP (*Simple Network Management Protocol* en anglais), le système connu sous le nom de *Automatic Computing* de la société IBM qui comporte un mécanisme d'auto réparation pour les systèmes embarqués. On peut aussi citer le système OMA-DM (*Open Mobile Alliance* - *Device Management* en anglais).

Ce serveur adresse des requêtes à chaque appareil constituant le réseau d'appareils que l'on cherche à diagnostiquer. Pour ce faire, le serveur de diagnostic établit des communications point à point à destination de chaque appareil. Les opérations de diagnostic sont contrôlées par le serveur central. Ceci implique que chaque phase de diagnostic mette en œuvre un ensemble de communications entre le serveur central et les divers appareils contrôlés.

Lorsque la taille du réseau administré augmente, les besoins en communication impliqués par ce diagnostic augmentent exponentiellement. Elle nécessite par ailleurs l'utilisation d'une importante quantité de ressources de communication au sein des appareils administrés.

Le document WO2011/123328A1 divulgue un système comportant une pluralité de serveurs de type OMA-DM connectés à un même client de type OMA-DM. Les serveurs disposent d'une interface pour envoyer des commandes au client. Le client dispose de cette même interface pour retourner des statuts et des alertes. Les serveurs disposent d'une autre interface pour interagir entre eux.

Le document EP2043298 décrit un système et une méthode donnant un cadre pour construire une nouvelle classe de services de contrôle et de gestion de réseaux. Ce cadre peut être utilisé pour construire des services d'autogestion pour supporter des réseaux décentralisés tels que des réseaux maillés.

L'invention propose un système et des méthodes de diagnostic hiérarchique permettant de limiter les ressources nécessaires à son fonctionnement au sein de chaque appareil impliqué. Il vise aussi à pouvoir prendre en charge un réseau de très grande taille. Le système proposé est basé sur un réseau virtuel reliant les divers appareils pour former un arbre hiérarchique. Ce réseau virtuel s'appuie sur le réseau de communication réelle entre les appareils. Toutefois, la topologie du réseau virtuel est indépendante de celle du réseau réel. Chaque appareil comporte un agent de diagnostic offrant des capacités d'autodiagnostic locales. Chaque appareil permet d'offrir un état de son fonctionnement et du fonctionnement de tout le sous-réseau dont il est le père. Les capacités d'autodiagnostic d'un appareil sont implémentées soit localement sur l'appareil, soit au sein des appareils de son environnement réseau proche en fonction des capacités des différents équipements.

La communication hiérarchique entre le serveur et les appareils permet de diminuer les communications nécessaires à l'administration du système. Les capacités de diagnostic locales et d'autoréparation locale permettent de diminuer le nombre de communications nécessaires.

L'invention concerne un dispositif comportant des moyens de communication pour communiquer au sein d'un réseau de communication physique avec un ensemble d'appareils qui comporte des moyens d'autodiagnostics locaux ; des moyens de gestion d'un réseau de communication hiérarchique virtuel avec l'ensemble d'appareils au sein du réseau de communication physique et des moyens de déterminer un statut de diagnostic relatif au résultat des moyens d'autodiagnostics locaux et des moyens d'autodiagnostics des appareils dépendants dudit dispositif dans ledit réseau de communication hiérarchique virtuel.

Selon un mode particulier de réalisation de l'invention, les moyens d'autodiagnostics comportent un ensemble d'agents de diagnostics relatifs à des fonctionnalités locales de l'appareil.

Selon un mode particulier de réalisation de l'invention, les moyens d'autodiagnostics comportent également des agents de diagnostics relatifs à des fonctionnalités externes appartenant à d'autres appareils du réseau de communication.

Selon un mode particulier de réalisation de l'invention, les moyens d'autodiagnostics fonctionnent sous le contrôle d'un ensemble de règles dynamiques.

Selon un mode particulier de réalisation de l'invention, les moyens d'autodiagnostics comportent en outre des moyens d'autoréparation.

Selon un mode particulier de réalisation de l'invention, les moyens d'autodiagnostics comportent en outre des moyens de répondre à une requête demandant le statut de l'ensemble du sous-réseau dont le dispositif est la racine au sein du réseau de communication virtuel.

Selon un mode particulier de réalisation de l'invention, les moyens d'autodiagnostics comportent en outre des moyens pour remonter un dysfonctionnement détecté localement en fonction du type de dysfonctionnement.

Selon un mode particulier de réalisation de l'invention, les moyens d'autodiagnostics comportent en outre des moyens de produire un diagnostic selon un mode d'autodiagnostic autonome en utilisant des agents de diagnostics représentant uniquement des fonctionnalités locales.

Selon un mode particulier de réalisation de l'invention, les moyens d'autodiagnostics comportent en outre des moyens de produire un diagnostic selon un mode d'autodiagnostic récursif en utilisant des agents de diagnostics représentant des fonctionnalités locales et un objet externe.

Selon un mode particulier de réalisation de l'invention, les moyens d'autodiagnostics comportent en outre des moyens de produire un diagnostic selon un mode d'autodiagnostic collaboratif en utilisant des agents de diagnostics représentant des fonctionnalités locales et de multiples objets externes.

L'invention concerne également un réseau d'appareils tel qu'il vient d'être brièvement décrit formant entre eux un système de diagnostic dudit réseau.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre la notion de réseau virtuel de réseaux réels utilisés dans un exemple de réalisation de l'invention.
La Fig. 2 illustre l'architecture d'un équipement du réseau comportant un module d'autodiagnostic.
La Fig. 3 illustre le mode d'autodiagnostic autonome.
La Fig. 4 illustre le mode d'autodiagnostic récursif.
La Fig. 5 illustre le mode d'autodiagnostic collaboratif.
La Fig. 6 illustre l'organigramme d'une opération d'autodiagnostic.

L'invention se place dans le cadre de réseaux de grandes dimensions d'équipements communiquant dans un mode machine à machine. Les équipements peuvent être des appareils de très faibles ressources. Il peut s'agir de simples capteurs qui seront remplacés lorsqu'ils n'auront plus d'énergie. Ces équipements disposent de capacités de communication typiquement de communication sans fil. Il peut s'agir de
toute technologie de type Bluetooth, Wifi ou encore communication de téléphonie sans fil de type GSM. Typiquement les réseaux considérés seront hétérogènes. Le réseau physique peut donc être basé sur un ensemble de technologies filaires ou sans fil permettant de relier les différents équipements.

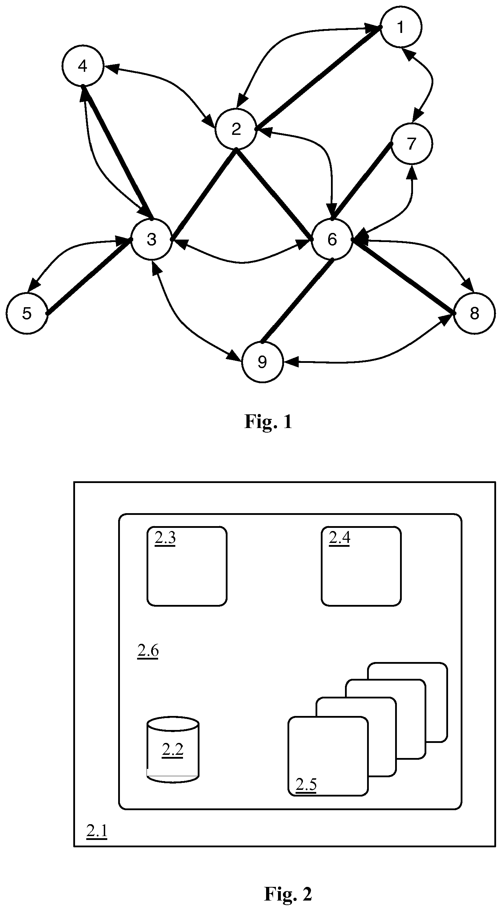

La figure 1 illustre un réseau de neuf équipements. Ces équipements sont reliés entre eux par un réseau de communication physique. Ces liens de communication physique sont illustrés sur la figure par un ensemble de flèches doubles. On voit que selon le réseau physique, le nœud 1 par exemple, peut communiquer avec le nœud 2 et le nœud 7. Le nœud 2 peut quant à lui communiquer avec les nœuds 4, 1 et 6, et ainsi de suite. Ce réseau physique peut avoir tout type de topologie.

Un réseau de communication virtuelle est bâti au-dessus de ce réseau physique. Ce réseau de communication virtuelle possède une topologie typiquement hiérarchique. Cette topologie est implémentée sous la forme d'un arbre. Le réseau virtuel possède donc typiquement une racine. Cette racine constitue le serveur de diagnostic maître du système. Ensuite un chemin hiérarchique relie cette racine à l'ensemble des nœuds du réseau. Dans l'exemple de la Fig. 1, le nœud 1 est le nœud racine. Le nœud 1 racine a un seul fil qui est le nœud 2. Bien que relié physiquement au nœud 7, le nœud 1 n'est pas le père du nœud 7 dans le réseau virtuel. Dans celui-ci, le chemin entre le nœud 1 et le nœud 7 passe par les nœuds 2 et 6. On constate également que le nœud 2 est connecté au nœud 3 dans le réseau virtuel alors que ces deux nœuds ne sont pas physiquement connectés.

L'approche d'autodiagnostic conçue pour des réseaux de machine à machine de très grande taille repose sur une collection d'agents de diagnostics locaux qui réalisent les opérations de diagnostic dans les appareils. Ces agents fonctionnent dans un écosystème nommé le module d'autodiagnostic. Ils forment un réseau virtuel de collaboration, selon une configuration de base et auto configurable selon des règles définies et modifiables. Les agents surveillent l'état de leurs dispositifs et le cas échéant procèdent aux diagnostics et corrections de façon autonome et avertissent leur niveau hiérarchique supérieur des évolutions d'états de fonctionnement.

Ce système permet d'avoir, à chaque sommet hiérarchique de ce réseau, y compris au sommet du système, un aperçu d'état de fonctionnement des dispositifs sous-jacents compte tenu du fait que chaque état fonctionnel de niveau supérieur agrège un résumé d'état de dispositifs de niveaux inférieurs.

Chaque équipement du réseau comporte son propre module d'autodiagnostic 2.6 qui fait tourner son propre ensemble d'agents de diagnostics.

Les modules d'autodiagnostic implémentent toutes les fonctions habituelles qui permettent l'exécution des agents de diagnostics et qui assurent la conformité avec les stratégies de diagnostic spécifiques relatives à l'équipement concerné.

Les modules d'autodiagnostic ont pour but l'implémentation des fonctions suivantes : l'autodiagnostic avec notifications d'alarme, le diagnostic d'appareils distants et/ou autonomes et la détection proactive et la réparation des dysfonctionnements au plus tôt.

L'approche d'autodiagnostic convient à des réseaux à très large échelle où l'administration des équipements impacte les coûts. La flexibilité est le résultat d'une approche basée sur l'utilisation d'un ensemble de règles qui permettent aux règles de diagnostic d'être mises à jour ou désactivées indépendamment avec une stratégie basée sur le retour de l'administration de réseau. La logique des règles qui produisent les diagnostics est séparée des composants de traitement qui exécutent ces règles de la même manière qu'un moteur d'exécution d'un langage de script est séparé des scripts exécutés. Les agents de diagnostics mentionnés plus haut sont des instances de séquences de règles de diagnostics.

Les règles de diagnostics décrivent comment la logique orientée diagnostique, et donc l'agent de diagnostic, s'appliquent aux composants qui représentent une part atomique du statut des appareils. Ces parts atomiques sont appelées des objets contrôlés. Anticipant des résultats de diagnostic, les règles décrivent aussi quelles actions doivent être prises. Différentes réactions au diagnostic sont possibles parmi celles-ci : ne rien faire, générer une notification ou initier une procédure d'auto réparation.

La notion d'objets contrôlés peut être étendue. Au lieu de simplement représenter des fonctionnalités locales de l'appareil, les objets contrôlés peuvent aussi représenter des fonctionnalités externes. Par exemple, un objet contrôlé local peut représenter le statut d'un appareil voisin dans le réseau. Dans ce cas, l'application des règles locales résulte dans le diagnostic de deux appareils en adressant un appareil unique. Il est possible de multiplier ceci et d'avoir au sein d'un seul appareil un ensemble d'objets contrôlés représentant un ou plusieurs appareils externes. On obtient ainsi un diagnostic au niveau du nœud qui produit un diagnostic dans le groupe d'appareils.

La stratégie de déclenchement d'un autodiagnostic doit être établie par appareil. Le diagnostic peut être initié périodiquement par une stratégie de contrôle permanent ou déclenché par des événements aléatoires dépendants du type de service mis en place.

La Fig. 2 illustre l'architecture d'un équipement du réseau 2.1 comportant un module d'autodiagnostic 2.6. Ce module comporte une base de données 2.2 qui permet de mémoriser les différents objets mémorisés dans ce module de diagnostic. Cette base de données mémorise également la structure du réseau virtuel, par exemple, des références sur les fils de l'appareil courant ainsi que sur le père. En particulier, le module comporte un statut 2.3 qui représente l'état de fonctionnement de l'équipement. Ce module fonctionne sous le contrôle d'un ensemble de règles 2.4. Ces règles sont dynamiques et permettent l'établissement du statut 2.3 ainsi que, le cas échéant, les actions visant à réparer un dysfonctionnement. Le module comporte un ensemble 2.5 d'objets contrôlés. Ces objets sont des objets élémentaires logiciels qui représentent des parties atomiques de l'appareil et/ou des fonctionnalités externes au sein d'appareils distants.

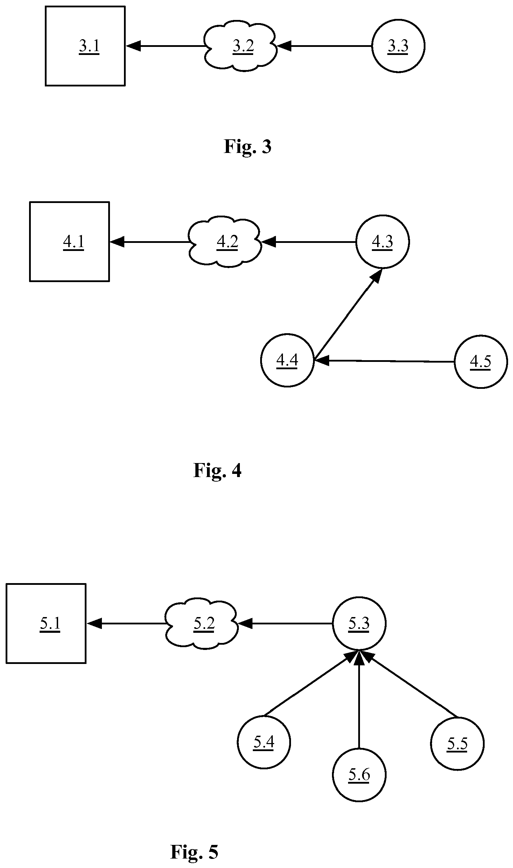

Les agents de diagnostics qui produisent les diagnostics peuvent opérer selon trois différents modes. Le premier mode est appelé mode d'autodiagnostic autonome. Dans ce mode, l'appareil effectue un diagnostic local en utilisant les agents de diagnostics représentant uniquement des fonctionnalités locales. Ce mode est illustré par la Fig. 3. Sur cette figure, on voit un appareil 3.3 qui produit son statut d'autodiagnostic. Ce statut est alors transféré via le réseau virtuel 3.2 à un serveur de diagnostic 3.1.

Un second mode est appelé mode d'autodiagnostic récursif. Dans ce mode, l'appareil effectuait un diagnostic en utilisant des agents de diagnostics locaux représentant des fonctionnalités locales et un objet externe. Ce mode est illustré par la Fig. 4. Dans cette figure l'objet 4.5 effectue son autodiagnostic. Son statut est transmis à l'objet 4.4. Cet objet 4.4 effectue également son autodiagnostic dont il agrège le résultat avec celui reçu de l'objet 4.5. Le statut résultant est envoyé à l'objet 4.3 qui fait de même. Le statut de l'objet 4.3 représente donc l'état de fonctionnement de la chaîne des objets 4.3, 4.4 et 4.5.

Un troisième mode est appelé mode collaboratif. Dans ce mode, l'appareil effectue un diagnostic de nœuds sur un ensemble d'objets contrôlés représentant ses fonctionnalités locales et de multiples objets externes. Ce mode est particulièrement adapté à des réseaux d'appareils ayant une topologie en étoile. Ce mode est illustré par la Fig. 5. Sur cette figure, l'objet 5.3 effectue le diagnostic de l'ensemble de la grappe d'objets 5.3, 5.4, 5.5 et 5.6.

Ces trois types d'architecture peuvent se combiner et coexister dans un seul réseau. Le module d'autodiagnostic d'une racine peut être configuré pour appliquer récursivement à un ensemble d'appareils la fonction de diagnostic de façon à définir le statut opérationnel d'une grappe d'appareils. La combinaison des modes récursif et collaboratif permet d'établir le diagnostic d'une grappe d'appareils en adressant seulement le nœud racine de cette grappe. Il n'est pas nécessaire d'adresser séparément les différents nœuds pour obtenir un diagnostic de l'ensemble du réseau. Une requête adressée à un nœud racine est suffisante.

On voit donc qu'un nœud, en fonction de son emplacement dans le réseau, contient un ensemble d'objets contrôlés correspondant à ses propres fonctionnalités Internet et, éventuellement, un ensemble d'objets contrôlés correspondant à des appareils externes de son environnement réseau. Il s'agit typiquement de ses fils dans la topologie du réseau virtuel construit.

Lorsqu'un dysfonctionnement est détecté sur un appareil du réseau, des actions de plusieurs types peuvent être entreprises en fonction de la catégorie du dysfonctionnement. On classera les dysfonctionnements en, par exemple, au moins deux catégories, une première catégorie de dysfonctionnements critiques et une seconde catégorie de dysfonctionnements légers. D'autres catégories peuvent être définies au besoin. Si le dysfonctionnement est critique, il provoquera une remontée de ce statut au père de l'appareil associé à l'identifiant de l'appareil fautif. Si le dysfonctionnement est simplement léger, l'identifiant de l'appareil ne sera pas remonté. À un nœud quelconque de l'arbre, on peut savoir dans le sous-arbre-fils qu'un dysfonctionnement est apparu. On réalise une agrégation de l'ensemble des nœuds qui subissent un dysfonctionnement critique. On dispose ainsi de l'identifiant de l'ensemble de ces nœuds. Si le dysfonctionnement est critique, on peut entrer en communication directe avec l'appareil fautif. Si le dysfonctionnement est léger, on enverra une requête de découverte qui va parcourir le sous-arbre pour remonter l'identifiant du nœud fautif. Cette étape de découverte ne sera faite qu'en cas de besoin.

L'attribution d'une catégorie à un dysfonctionnement donné est faite par les règles d'autodiagnostic et peut donc être modifiée dynamiquement. On peut ainsi configurer finement et dynamiquement les dysfonctionnements qui vont remonter vers la racine du réseau et ceux qui restent locaux.

Autant que faire se peut, on tente de réparer les dysfonctionnements au niveau local. Les règles définissent un ensemble d'actions de réparation qui peuvent être entreprises pour tenter de corriger le problème lorsqu'il est détecté. Ces actions peuvent comprendre, par exemple, un redémarrage de l'appareil, la restauration d'un ensemble de paramètres par défaut mémorisés par l'appareil ou par un de ses voisins dans le réseau. En appliquant des règles de réparation locales lors de la détection d'un dysfonctionnement, on limite le besoin en communication entre la racine et les nœuds dysfonctionnants.

Avantageusement, un nœud dispose de règles lui permettant de reconfigurer le réseau virtuel pour faire face à des dysfonctionnements affectant le fonctionnement de celui-ci. Par exemple, la perte d'un lien de communication physique peut être corrigée par une modification de la topologie du réseau virtuel. Il peut en être de même si un nœud est surchargé alors qu'il sert de père à un grand nombre de nœuds du réseau virtuel, une reconfiguration peut alléger sa charge.

Par défaut, l'intelligence de diagnostic liée à des fonctionnalités locales d'un appareil se trouve sur cet appareil. Toutefois, il est possible que les capacités de l'appareil soient limitées au point que ce ne soit pas possible. On permet alors une délocalisation de cette intelligence au sein d'un autre appareil de l'environnement réseau proche de cet appareil. Typiquement, il s'agira du père de l'appareil dans la topologie du réseau virtuel. Mais ce n'est pas obligatoire. Il est avantageux que l'appareil soit tout de même proche dans le réseau virtuel de façon à limiter les communications entre l'appareil hôte de l'intelligence de diagnostic et l'appareil cible de ce diagnostic.

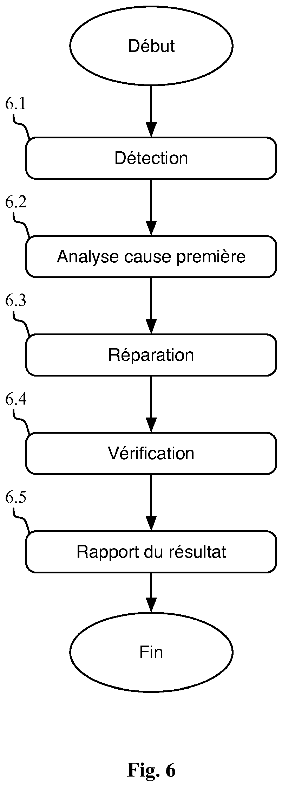

La Fig. 6 illustre l'organigramme d'une opération d'autodiagnostic. Lors d'une première étape 6.1, un dysfonctionnement est détecté par l'un des agents de diagnostic. Un dysfonctionnement étant détecté, il importe d'en connaître la cause première. En effet, il est courant qu'un dysfonctionnement premier entraîne une série de dysfonctionnements secondaires qui découlent de ce premier dysfonctionnement. Il importe donc de remonter au premier dysfonctionnement et à sa cause première, ce qui est fait lors de l'étape 6.2. L'application des règles conduit alors à une étape 6.3 d'auto réparation lorsqu'elle est possible en fonction de la cause identifiée. Une fois cette étape d'auto réparation tentée, il importe de vérifier la correction du dysfonctionnement lors d'une étape 6.4. Le résultat est alors reporté au père dans le réseau virtuel, c'est l'étape 6.5.

## Revendications

1. Dispositif (2.1) comportant des moyens de communication pour communiquer au sein d'un réseau de communication physique avec un ensemble d'appareils **caractérisé en ce qu'**il comporte :
- des moyens (2.6) d'autodiagnostics locaux ;
- des moyens de gestion (2.2) d'un réseau de communication hiérarchique virtuel avec l'ensemble d'appareils au sein du réseau de communication physique ;
- des moyens (2.5) de déterminer un statut de diagnostic relatif au résultat des moyens d'autodiagnostics locaux et des moyens d'autodiagnostics des appareils dépendants dudit dispositif dans ledit réseau de communication hiérarchique virtuel.

2. Dispositif selon la revendication 1, **caractérisé en ce que** les moyens d'autodiagnostics comportent un ensemble d'agents de diagnostics relatifs à des fonctionnalités locales de l'appareil.

3. Dispositif selon l'une des revendications 1 ou 2, **caractérisé en ce que** les moyens d'autodiagnostics comportent également des agents de diagnostics relatifs à des fonctionnalités externes appartenant à d'autres appareils du réseau de communication.

4. Dispositif selon l'une des revendications 1 à 3, **caractérisé en ce que** les moyens d'autodiagnostics fonctionnent sous le contrôle d'un ensemble de règles dynamiques.

5. Dispositif selon l'une des revendications 1 à 4, **caractérisé en ce que** les moyens d'autodiagnostics comportent en outre des moyens d'autoréparation.

6. Dispositif selon l'une des revendications 1 à 5, **caractérisé en ce que** les moyens d'autodiagnostics comportent en outre des moyens de répondre à une requête demandant le statut de l'ensemble du sous-réseau dont le dispositif est la racine au sein du réseau de communication virtuel.

7. Dispositif selon l'une des revendications 1 à 6, **caractérisé en ce que** les moyens d'autodiagnostics comportent en outre des moyens pour remonter un dysfonctionnement détecté localement en fonction du type de dysfonctionnement.

8. Dispositif selon l'une des revendications 1 à 6, **caractérisé en ce que** les moyens d'autodiagnostics comportent en outre des moyens de produire un diagnostic selon un mode d'autodiagnostic autonome en utilisant des agents de diagnostics représentant uniquement des fonctionnalités locales.

9. Dispositif selon l'une des revendications 1 à 6, **caractérisé en ce que** les moyens d'autodiagnostics comportent en outre des moyens de produire un diagnostic selon un mode d'autodiagnostic récursif en utilisant des agents de diagnostics représentant des fonctionnalités locales et un objet externe.

10. Dispositif selon l'une des revendications 1 à 6, **caractérisé en ce que** les moyens d'autodiagnostics comportent en outre des moyens de produire un diagnostic selon un mode d'autodiagnostic collaboratif en utilisant des agents de diagnostics représentant des fonctionnalités locales et de multiples objets externes.

11. Réseau d'appareils selon l'une des revendications 1 à 10 formant un système de diagnostic dudit réseau.

## Patentansprüche

1. Vorrichtung (2.1), welche Kommunikationsmittel zum Kommunizieren innerhalb eines physischen Kommunikationsnetzes mit einer Menge von Geräten aufweist, **dadurch gekennzeichnet, dass** sie umfasst:
- lokale Selbstdiagnosemittel (2.6);
- Mittel zur Verwaltung (2.2) eines virtuellen hierarchischen Kommunikationsnetzes mit der Menge von Geräten innerhalb des physischen Kommunikationsnetzes;
- Mittel (2.5) zum Bestimmen eines Diagnosestatus, der sich auf das Ergebnis der lokalen Selbstdiagnosemittel und der Selbstdiagnosemittel der von der Vorrichtung abhängigen Geräte in dem virtuellen hierarchischen Kommunikationsnetz bezieht.

2. Vorrichtung nach Anspruch 1, **dadurch gekennzeichnet, dass** die Selbstdiagnosemittel eine Menge von Diagnoseagenten umfassen, die sich auf lokale Funktionalitäten des Geräts beziehen.

3. Vorrichtung nach Anspruch 1 oder 2, **dadurch gekennzeichnet, dass** die Selbstdiagnosemittel auch Diagnoseagenten umfassen, die sich auf externe Funktionalitäten beziehen, die zu anderen Geräten des Kommunikationsnetzes gehören.

4. Vorrichtung nach einem der Ansprüche 1 bis 3, **dadurch gekennzeichnet, dass** die Selbstdiagnosemittel unter der Kontrolle einer Menge von dynamischen Regeln arbeiten.

5. Vorrichtung nach einem der Ansprüche 1 bis 4, **dadurch gekennzeichnet, dass** die Selbstdiagnosemittel außerdem Selbstreparaturmittel umfassen.

6. Vorrichtung nach einem der Ansprüche 1 bis 5, **dadurch gekennzeichnet, dass** die Selbstdiagnosemittel außerdem Mittel zum Antworten auf eine Anfrage umfassen, die den Status der Menge des Teilnetzes, dessen Wurzel die Vorrichtung ist, innerhalb des virtuellen Kommunikationsnetzes abfragt.

7. Vorrichtung nach einem der Ansprüche 1 bis 6, **dadurch gekennzeichnet, dass** die Selbstdiagnosemittel außerdem Mittel zum Zurückverfolgen einer lokal erkannten Funktionsstörung in Abhängigkeit vom Typ der Funktionsstörung umfassen.

8. Vorrichtung nach einem der Ansprüche 1 bis 6, **dadurch gekennzeichnet, dass** die Selbstdiagnosemittel außerdem Mittel zum Erstellen einer Diagnose gemäß einem Modus der autonomen Selbstdiagnose unter Verwendung von Diagnoseagenten, die ausschließlich lokale Funktionalitäten repräsentieren, umfassen.

9. Vorrichtung nach einem der Ansprüche 1 bis 6, **dadurch gekennzeichnet, dass** die Selbstdiagnosemittel außerdem Mittel zum Erstellen einer Diagnose gemäß einem Modus der rekursiven Selbstdiagnose unter Verwendung von Diagnoseagenten, die lokale Funktionalitäten und ein externes Objekt repräsentieren, umfassen.

10. Vorrichtung nach einem der Ansprüche 1 bis 6, **dadurch gekennzeichnet, dass** die Selbstdiagnosemittel außerdem Mittel zum Erstellen einer Diagnose gemäß einem Modus der kollaborativen Selbstdiagnose unter Verwendung von Diagnoseagenten, die lokale Funktionalitäten und mehrere externe Objekte repräsentieren, umfassen.

11. Netz von Geräten nach einem der Ansprüche 1 bis 10, welche ein Diagnosesystem des Netzes bilden.

## Claims

1. Device (2.1) comprising communication means for communicating within a physical communication network with a set of apparatuses, **characterised in that** it comprises:
- means (2.6) for local self-diagnostics;
- means (2.2) for managing a virtual hierarchical communication network with the set of apparatuses within the physical communication network;
- means (2.5) for determining a diagnostic status relating to the result of the local self-diagnostic means and of the self-diagnostic means of the apparatuses that are dependent on said device in said virtual hierarchical communication network.

2. Device according to claim 1, **characterised in that** the self-diagnostic means comprise a set of diagnostic agents relating to local functionalities of the apparatus.

3. Device according to any one of claim 1 or claim 2, **characterised in that** the self-diagnostic means further comprise diagnostic agents relating to external functionalities belonging to other apparatuses of the communication network.

4. Device according to any one of claims 1 to 3, **characterised in that** operation of the self-diagnostic means is governed by a set of dynamic rules.

5. Device according to any one of claims 1 to 4, **characterised in that** the self-diagnostic means further comprise self-repair means.

6. Device according to any one of claims 1 to 5, **characterised in that** the self-diagnostic means further comprise means for responding to a request demanding the status of the entire sub-network of which the device is the root within the virtual communication network.

7. Device according to any one of claims 1 to 6, **characterised in that** the self-diagnostic means further comprise means for uplinking a locally detected malfunction according to the type of malfunction.

8. Device according to any one of claims 1 to 6, **characterised in that** the self-diagnostic means further comprise means for producing a diagnosis in an autonomous self-diagnostic mode, by using diagnostic agents that represent only local functionalities.

9. Device according to any one of claims 1 to 6, **characterised in that** the self-diagnostic means further comprise means for producing a diagnosis in a recursive self-diagnostic mode, by using diagnostic agents that represent local functionalities and one external object.

10. Device according to any one of claims 1 to 6, **characterised in that** the self-diagnostic means further comprise means for producing a diagnosis in a collaborative self-diagnostic mode, by using diagnostic agents that represent local functionalities and multiple external objects.

11. Network of apparatuses according to any one of claims 1 to 10, which form a system for diagnosing said network.
